# EUROPÄISCHE PATENTSCHRIFT

(11) **EP 1 062 835 B1**
(45) Veröffentlichungstag und Bekanntmachung des Hinweises auf die Patenterteilung: **19.12.2001**
(21) Anmeldenummer: 99916778.6
(22) Anmeldetag: 11.03.1999
(51) Int. Cl.: H04Q 11/04

(54) **ATM-VERMITTLUNGSEINRICHTUNG MIT ERSTEN UND ZWEITEN VERBINDUNGSPFADEN**
ATM SWITCHING DEVICE WITH FIRST AND SECOND CONNECTION PATHS
COMMUTATEUR ATM DOTE DE PREMIERES ET DEUXIEMES VOIES DE LIAISON

(30) Priorität: 11.03.1998 DE 19810559
(43) Veröffentlichungstag der Anmeldung: 27.12.2000
(73) Patentinhaber: SIEMENS AKTIENGESELLSCHAFT, 80333 München (DE)
(72) Erfinder: BRILL, Arno, D-81377 München (DE)
(86) Internationale Anmeldenummer: DE9900673
(87) Internationale Veröffentlichungsnummer: WO9946953

(56) Entgegenhaltungen:
- EP-A- 0 538 853
- " BROADBAND INTEGRATED SERVICES DIGITAL " BROADBAND INTEGRATED SERVICES DIGITAL NETWORK (B-ISDN) - SIGNALLING SYSTEM NO. 7 NETWORK (B-ISDN) - SIGNALLING SYSTEM NO. 7 B-ISDN USER PART (B-ISUP) - BASIC CALL B-ISDN USER PART (B-ISUP) - BASIC CALL PROCEDURES" PROCEDURES" ITU-T RECOMMENDATION Q.2764, ITU-T RECOMMENDATION Q.2764, Februar 1995 (1995-02), XP002110343 Februar 1995 (1995-02), XP002110343 Genf Genf in der Anmeldung erwähnt in der Anmeldung erwähnt
- " BROADBAND INTEGRATED SERVICES DIGITAL " BROADBAND INTEGRATED SERVICES DIGITAL NETWORK (B-ISDN) - SIGNALLING SYSTEM NO. 7 NETWORK (B-ISDN) - SIGNALLING SYSTEM NO. 7 B-ISDN USER PART (B-ISUP) - BASIC CALL B-ISDN USER PART (B-ISUP) - BASIC CALL PROCEDURES" ITU-T RECOMMENDATION Q.2764, PROCEDURES" ITU-T RECOMMENDATION Q.2764, Februar 1995 (1995-02), XP002110343 Genf Februar 1995 (1995-02), XP002110343 Genf

## Beschreibung

Die vorliegende Erfindung betrifft eine Vermittlungseinrichtung für ein Kommunikationsnetz nach dem Oberbegriff des Anspruchs 1. Insbesondere betrifft die vorliegende Erfindung eine Vermittlungseinrichtung für ein ATM-Breitband-Kommunikationsnetz.

In Kommunikationsnetzen sind mehrere Vermittlungseinrichtungen, die als Netzknoten dienen, über Verbindungspfade physikalisch miteinander verbunden. Zum Aufbau einer Verbindung zwischen zwei Teilnehmern des Kommunikationsnetzes muß zunächst, ausgehend von dem Zielknoten, ein geeigneter Verbindungspfad von dem anrufenden Teilnehmer zu dem gerufenen Teilnehmer ermittelt werden.

Um die Ermittlung des geeigneten Verbindungswegs (Routing) zu erleichtern, wurde das Prinzip der virtuellen Verbindungen erfunden, welches insbesondere in ATM-Breitband-Kommunikationsnetzen (Asynchronous Transfer Mode) angewendet wird. Mit Hilfe dieses Prinzips der virtuellen Verbindungen wird der Transport der Daten über das Netz erleichtert und damit beschleunigt. Gemäß dem ATM-Standard werden die zu übertragenden Daten in Form von Zellen übermittelt, die generell ein Steuerfeld (Header) von 5 Bytes und ein Informationsfeld (Payload) von 48 Bytes umfassen. Die ausgesendeten ATM-Zellen werden entsprechend den in ihren Headern festgelegten Informationen auf "virtuellen Pfaden" oder "virtuellen Verbindungen" (Virtual Path) durch das Kommunikationsnetz geschleust. Gemäß dem Prinzip der virtuellen Verbindungen wird der Weg zum Ziel nur einmal am Beginn festgelegt. Die einzelnen Vermittlungseinrichtungen geben diesem gewünschten Vermittlungspfad eine jeweils zwischen zwei benachbarten Netzknoten gültige Kennzahl und ordnen diese der Verbindung zu. Diese Kennzahl wird jeweils im Steuerfeld (Header) der Zellen vermerkt (Virtual Path Connection Identifier, VPCI). Die Vermittlungseinrichtungen brauchen dann bei Eintreffen einer ATM-Zelle nicht mehr den Zielweg neu zu erarbeiten, sondern betrachten lediglich die Kennzahl und wissen damit unmittelbar das anzusteuernde Ziel. Es wird von "virtuellen Verbindungen" gesprochen, da im Gegensatz zu reellen Verbindungen im Kommunikationsnetz der Übertragungskanal nicht für die Dauer der Verbindung ständig belegt ist, sondern der Übertragungskanal wird nur dann belegt, wenn tatsächlich zu übertragende Daten vorliegen, d. h. es werden nicht Pakete oder Zellen einer Verbindung pausenlos während der gesamten Verbindungszeit übermittelt, sondern es werden zugleich Pakete anderer Verbindungen in den Pausen auf dem selben Übertragungsweg weitergeleitet.

Aus dem zuvor erläuterten Prinzip der virtuellen Verbindungen folgt, daß über eine virtuelle Verbindung (Virtual Path Connecction, VPC) eine Mehrzahl von Übertragungskanälen übertragen werden. Jeder Übertragung wird hierzu ein sogenannter virtueller Kanal (Virtual Channel, VC) zugewiesen, so daß ein virtueller Pfad eine Vielzahl von virtuellen Kanälen umfassen kann. Die Zuweisung der virtuellen Kanäle erfolgt in den Netzknoten, d. h. den einzelnen Vermittlungseinrichtungen, wobei mit Zuweisung bzw. Belegung eines virtuellen Kanals zugleich die für die jeweilige Übertragung des virtuellen Kanals erforderliche Ressource (Bandbreite) belegt werden muß. Das prinzipielle Verfahren für die Belegung eines virtuellen Kanals und damit der Bandbreite für die jeweilige Verbindung ist gemäß der ITU-T-Empfehlung Q.2764 (International Telecommunications Union) folgendermaßen definiert:

Wie bereits zuvor erläutert worden ist, wird bei der Festlegung des geeigneten Übertragungs- bzw. Verbindungspfads zwischen zwei benachbarten Netzknoten bzw. Vermittlungseinrichtungen ein virtueller Kanal festgelegt. Dabei darf nur eine der beiden benachbarten Vermittlungseinrichtungen den virtuellen Kanal und damit die belegte Bandbreite vergeben, um eine Gegenbelegung von Übertragungskanälen zu vermeiden und zudem eine Gegenbelegung der Bandbreite für die einzelnen Übertragungen auszuschließen. In jeder Vermittlungseinrichtung ist konfiguriert, für welche der angeschlossenen Verbindungspfade die jeweilige Vermittlungseinrichtung einen virtuellen Kanal und damit eine zu belegende Bandbreite vergeben darf. Die zur Zuweisung eines virtuellen Kanals berechtigte Vermittlungseinrichtung wird "Assigning Exchange" genannt, während die andere Vermittlungseinrichtung in diesem Fall "Non-assigning Exchange" genannt wird. Jede Vermittlungseinrichtung überwacht bzw. führt Buch über die freie bzw. belegte Bandbreite von ausschließlich denjenigen virtuellen Verbindungen, für die die Vermittlungseinrichtung als "Assigning Exchange" konfiguriert ist. Die Verwaltung der freien bzw. belegten Bandbreite erfolgt in Form einer Tabelle, die durch eine Datei oder ein anderes Speichermittel realisiert ist und als "Bandwidth Pool" bezeichnet wird.

Eine Vermittlungseinrichtung, die für eine bestimmte virtuelle Verbindung als "Non-assigning Exchange" konfiguriert ist, darf für diese virtuelle Verbindung keinen virtuellen Kanal und damit auch keine Bandbreite für eine Verbindungsanfrage belegen. Insbesondere soll gemäß dem Stand der Technik eine Vermittlungseinrichtung nicht über die freie bzw. belegte Bandbreite von virtuellen Verbindungen Buch führen, für die sie als "Non-assigning Exchange" konfiguriert ist, d. h. bezüglich dieser virtuellen Verbindungen soll kein "Bandwidth Pool" in der entsprechenden Vermittlungseinrichtung geführt werden, da ansonsten die in den beiden Vermittlungseinrichtungen gleichzeitig geführten "Bandwidth Pools" im Laufe des Vermittlungsverkehrs nie identisch sein würden (z. B. insbesondere während des Verbindungsaufbaus zwischen den B-ISUP-Nachrichten "Release Message" (REL) und "Release Complete" (RLC). Zudem würden ansonsten die "Bandwidth Pools" aufgrund verschiedener Berechnungsalgorithmen in den beiden Vermittlungseinrichtungen, die von verschiedenen Herstellern oder Netzbetreibern stammen können, auseinanderlaufen, was insbesondere dann gravierend wäre, wenn es sich nicht um konstante Bitraten handelt.

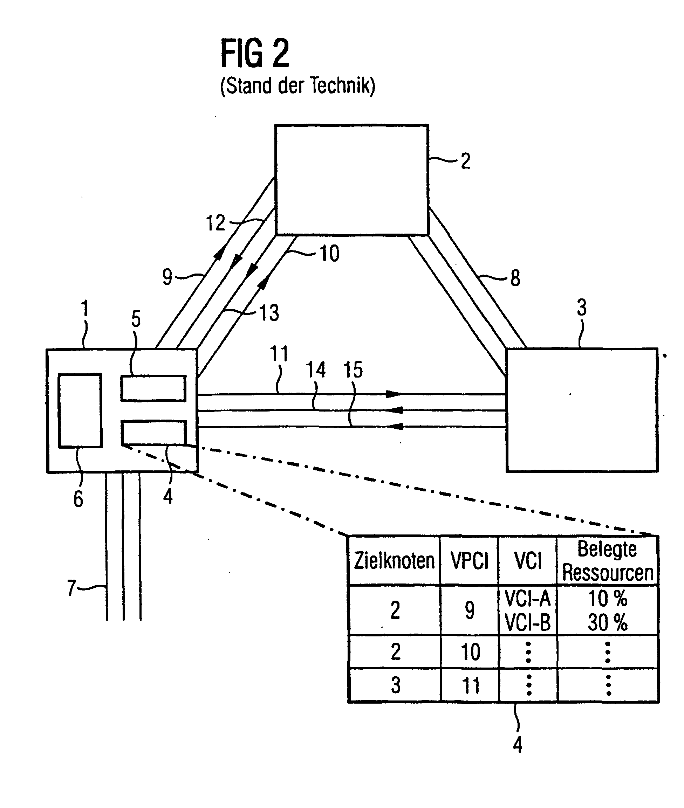

Das zuvor gemäß der ITU-T-Empfehlung Q.2764 vorgeschlagene Vermittlungsverfahren soll nachfolgend näher anhand Fig. 2 erläutert werden.

Fig. 2 zeigt beispielhaft den Ausschnitt eines Kommunikationsnetzes mit drei Vermittlungseinrichtungen 1 - 3, wobei im vorliegenden Fall insbesondere die Vermittlungseinrichtung 1 näher zu betrachten ist. Die einzelnen Vermittlungseinrichtungen 1 - 3 sind jeweils über mehrere virtuelle Verbindungspfade (Virtual Path Connection, VPC) 8 - 15 miteinander verbunden. Die Vermittlungseinrichtung 1 umfaßt eine zentrale Steuereinrichtung 6, die für die Verarbeitung von eingehenden Verbindungsanfragen sowie den entsprechenden Verbindungsaufbau zu den anderen Vermittlungseinrichtungen 2 und 3 verantwortlich ist. Insbesondere wählt die Steuereinrichtung 6 bei Vorliegen einer Verbindungsanfrage einen geeigneten Verbindungspfad zu einer benachbarten Vermittlungseinrichtung 2, 3 aus und belegt - falls möglich - die für die Verbindungsanfrage erforderliche Bandbreite, d. h. sie weist einen virtuellen Übertragungskanal zu einer benachbarten Vermittlungseinrichtung 2, 3 zu. Die Vermittlungseinrichtung 1 umfaßt Speichermittel 5, in denen die Funktion der Vermittlungseinrichtung 1 konfiguriert ist. In den Speichermitteln 5 ist insbesondere festgelegt, für welche der an die Vermittlungseinrichtung 1 angeschlossene Verbindungspfade 9 - 15 die Vermittlungseinrichtung 1 als "Assigning Exchange" tätig werden kann, d. h. für welche der angeschlossenen Verbindungspfade 9 - 15 die Vermittlungseinrichtung 1 selbst einen virtuellen Kanal zuweisen und damit Bandbreiten vergeben darf. Im vorliegenden Fall sei angenommen, daß die Vermittlungseinrichtung 1 für die Verbindungspfade 9 - 11 zuweisungsberechtigt ist und damit für die Verbindungspfade bei Vorliegen einer Verbindungsanfrage die erforderliche Bandbreite vergeben darf. Hingegen sei für die Verbindungspfade 12, 13 die Vermittlungseinrichtung 2 zuweisungsberechtigt, während für die Verbindungspfade 14, 15 die Vermittlungseinrichtung 3 als zuweisungsberechtigt, d. h. als "Assigning Exchange", vorausgesetzt wird. In den Speichermitteln 5 ist zudem beispielsweise konfiguriert, über welche der benachbarten Netzknoten bei Vorliegen einer Verbindungsanfrage grundsätzlich ein Verbindungspfad aufgebaut werden soll. So kann beispielsweise diesbezüglich festgelegt sein, daß bei Vorliegen einer Verbindungsanfrage die Vermittlungseinrichtung 1 stets einen Verbindungspfad über die Vermittlungseinrichtung 2 wählt.

Die Vermittlungseinrichtung 1 umfaßt zudem Speichermittel 4, die den zuvor beschriebenen "Bandwidth Pool" darstellen, d. h. die Speichermittel 4 speichern eine Tabelle, in der die freie bzw. belegte Bandbreite aller an die Vermittlungseinrichtung 1 angeschlossenen Verbindungspfade verwaltet wird, für die die Vermittlungseinrichtung 1 zuweisungsberechtigt ist und als "Assigning Exchange" tätig wird. Wie bereits erläutert worden ist, ist dies im vorliegenden Fall lediglich für die Verbindungspfade 9 - 11 der Fall. Wie in Fig. 2 gezeigt ist, speichern die Speichermittel 4 für jeden benachbarten Zielknoten 2, 3 und für jeden zuweisungsberechtigten Verbindungspfad 9 - 11 die jeweils belegten Ressourcen, d. h. die jeweils belegte Bandbreite, wobei jeder Verbindungspfad (Virtual Path Connection, VPC) durch einen entsprechenden Identifier (Virtual Path Connection Identifier, VPCI) identifiziert ist. Jeder virtuelle Verbindungspfad kann mehrere virtuelle Kanäle umfassen, die von der Vermittlungseinrichtung 1 diesem Vermittlungspfad zugewiesen worden sind, so daß die in den Speichermitteln 4 gespeicherte Tabelle (Bandwidth Pool) auch die für jeden Verbindungspfad zugewiesenen virtuellen Kanäle (Virtual Channel) mit Hilfe eines Identifiers (Virtual Channel Identifier, VCI) und die jeweils für den entsprechenden virtuellen Kanal belegte Bandbreite berücksichtigt.

Bei Vorliegen einer Verbindungsanfrage, die der Vermittlungseinrichtung 1 beispielsweise über ein weiteres Verbindungspfadbündel 7 von einer weiteren (nicht gezeigten) benachbarten Vermittlungseinrichtung zugeführt wird, wird ein geeigneter Verbindungspfad sowie ein geeigneter Übertragungskanal wie folgt festgelegt.

Sobald die Vermittlungseinrichtung 1 eine Verbindungsanfrage empfängt, soll die Vermittlungseinrichtung 1 zunächst versuchen, einen Verbindungspfad, für den die Vermittlungseinrichtung 1 als "Assigning Exchange" konfiguriert ist, mit einem geeigneten Übertragungskanal zu belegen und die für die Verbindungsanfrage erforderliche Bandbreite zu vergeben. Dies erfolgt durch Auswertung der in den Speichermitteln 4 abgelegten Tabelle. Liegt beispielsweise eine Verbindungsanfrage vor, die ca. 40 % der auf dem Verbindungspfad 9 insgesamt zur Verfügung stehenden Bandbreite belegen würde, könnte die Vermittlungseinrichtung 1 bei der in Fig. 2 dargestellten Situation den Verbindungspfad 9 für die gewünschte Verbindung auswählen und einen virtuellen Kanal VCI-C zuweisen und die Bandbreite von 40% vergeben. Die Übermittlung von Steuernachrichten zwischen den einzelnen Vermittlungseinrichtungen 1-3 erfolgt gemäß dem B-ISUP-Signalisierungsprotokoll, so daß die Vermittlungseinrichtung 1 nach Zuweisung eines virtuellen Kanals den ausgewählten Verbindungspfad sowie den zugewiesenen Übertragungskanal (und gegebenenfalls die belegte Bandbreite) der Vermittlungseinrichtung 2 in Form von entsprechenden Identifiern (Virtual Path Connection Identifier, VPCI und Virtual Channel Identifier, VCI) mitteilt, was in Form der ersten B-ISUP-Vorwärtsnachricht (Initial Address Message, IAM) erfolgt.

Konnte hingegen die Vermittlungseinrichtung 1 in denjenigen Verbindungspfaden 9 - 11, für die sie als "Assigning Exchange" konfiguriert ist, keinen geeigneten Übertragungskanal ermitteln, muß die Verbindung über einen der Verbindungspfade 12 - 15 erfolgen, für die die Vermittlungseinrichtung 1 als "Non-assigning Exchange" konfiguriert ist. In diesem Fall darf die Vermittlungseinrichtung 1 keinen Übertragungskanal zuweisen und keine Bandbreite für die gewünschte Verbindung vergeben, sondern muß die erforderliche Bandbreite von einer der benachbarten Vermittlungseinrichtung 2, 3 anfordern. Zu diesem Zweck fügt die als "Non-assigning Exchange" agierende Vermittlungseinrichtung in die B-ISUP-Vorwärtsnachricht IAM keine Identifier über den ausgewählten Verbindungspfad und den zugewiesenen Übertragungskanal (VPCI, VCI) ein und sendet diese B-ISUP-Vorwärtsnachricht an eine der beiden benachbarten Vermittlungseinrichtungen 2, 3. Dies geschieht, ohne daß die Vermittlungseinrichtung 1 Informationen darüber hat, ob die für die gewünschte Verbindung erforderliche Bandbreite von der entsprechenden benachbarten Vermittlungseinrichtung überhaupt zur Verfügung gestellt werden kann. Nach Eingang der Anfragen zur Zuweisung eines Übertragungskanals weist die entsprechende Vermittlungseinrichtung 2, 3, falls möglich, der gewünschten Verbindung einen Übertragungskanal auf einer der Verbindungspfade zu, für die die entsprechende Vermittlungseinrichtung als "Assigning Exchange" konfiguriert ist. Hat beispielsweise die Vermittlungseinrichtung 1 eine Anfrage zur Zuweisung eines Übertragungskanals an die Vermittlungseinrichtung 2 übermittelt, kann die Vermittlungseinrichtung 2 nach einem geeigneten Übertragungskanal lediglich auf den Verbindungspfaden 12 und 13 suchen. Kann die Vermittlungseinrichtung 2 in diesem Fall einen geeigneten Übertragungskanal auf den Verbindungspfaden 12 und 13 zuweisen, teilt die Vermittlungseinrichtung 2 in einer entsprechenden ersten B-ISUP-Rückwärtsnachricht, die als "Initial Address Message" (IAM) bezeichnet wird, der Vermittlungseinrichtung 1 den ausgewählten Verbindungspfad sowie den ausgewählten Übertragungskanal in Form der Identifier VPCI, VCI mit.

Mit der zuvor beschriebenen Vorgehensweise ergeben sich die folgenden Probleme:

Wie bereits erläutert worden ist, besitzt jede Vermittlungseinrichtung 1 lediglich Informationen über die auf denjenigen Verbindungspfaden verfügbare Bandbreite, für die die jeweilige Vermittlungseinrichtung als "Assigning Exchange" konfiguriert ist, d. h. für die die jeweilige Vermittlungseinrichtung zur Zuweisung eines Übertragungskanals und zur Belegung entsprechender Bandbreite berechtigt ist. Kann beispielsweise in Fig. 2 die Vermittlungseinrichtung 1 unter diesen Verbindungspfaden keinen geeigneten Verbindungspfad für eine vorliegende Verbindungsanfrage ermitteln, wird die Belegungsnachricht, d. h. die Anfrage zur Belegung eines Übertragungskanal, einfach zur erstbesten benachbarten Vermittlungseinrichtung 2, 3 geschickt. Dies geschieht ohne zu wissen, ob die jeweilige benachbarte Vermittlungseinrichtung 2, 3 überhaupt ausreichend Ressourcen für die gewünschte Verbindung zur Verfügung stellt. Kann die von der Vermittlungseinrichtung 1 kontaktierte benachbarte Vermittlungseinrichtung 2, 3 die geforderte Bandbreite nicht auf denjenigen Verbindungspfaden zur Verfügung stellen, für die die Vermittlungseinrichtung 2, 3 als "Assigning Exchange" konfiguriert ist, wird die Verbindungsanfrage mit einer B-ISUP-Rückwärtsnachricht IAR (Initial Address Reject) abgewiesen. In diesem Fall unternimmt die Vermittlungseinrichtung 1 einen erneuten Versuch und fragt bei einer anderen der benachbarten Vermittlungseinrichtungen 2, 3 nach, ob diese einen geeigneten Verbindungspfad für die gewünschte Verbindung zur Verfügung stellen kann (Re-Routing). Die Anzahl dieser Re-Routing-Vorgänge ist im allgemeinen auf einen Versuch begrenzt, so daß es im Prinzip zu keinem Re-Routing über einen dritten Verbindungsweg kommen kann. Hierdurch können jedoch die Ressourcen auf denjenigen Verbindungspfaden, für die die Vermittlungseinrichtung 1 als "Non-assigning Exchange" konfiguriert ist, nicht effizient ausgenutzt werden. Zudem folgt aus der zuvor beschriebenen Vorgehensweise, daß die Wahrscheinlichkeit eines erfolgreichen Verbindungsaufbaus aufgrund der Tatsache, daß die Vermittlungseinrichtung 1 für den Fall, daß sie selbst keinen geeigneten Verbindungspfad ermitteln kann, reduziert wird und durch chancenlose Verbindungsversuche ein "Blindverkehr" auftreten kann. Sollte jedoch zwischen der Vermittlungseinrichtung 1 und einer benachbarten Vermittlungseinrichtung 2, 3 kein geeigneter Verbindungspfad gefunden werden, müßten alle bereits vor der Vermittlungseinrichtung 1 aufgebauten Verbindungspfade wieder rückwirkend ausgelöst, d. h. abgebaut werden, was sehr aufwendig ist.

Schließlich folgt aus den zuvor genannten Gründen auch, daß eine Vermittlungseinrichtung nicht für sämtliche zwischen zwei Vermittlungseinrichtungen vorhandenen Verbindungspfade als "Non-assigning Exchange" konfiguriert sein sollte, da dies für einen erfolgreichen Verbindungsaufbau extrem ineffizient wäre.

Der vorliegenden Erfindung liegt daher die Aufgabe zugrunde, eine Vermittlungseinrichtung der eingangs beschriebenen Art derart auszugestalten, daß die Wahrscheinlichkeit eines erfolgreichen Erfindungsaufbaus und die Effizienz des Verbindungsaufbaus erhöht wird.

Diese Aufgabe wird gemäß der vorliegenden Erfindung mit den im Anspruch 1 angegeben Merkmalen gelöst. Die Unteransprüche beschreiben vorteilhafte und bevorzugte Ausführungsbeispiele der vorliegenden Erfindung.

Gemäß der vorliegenden Erfindung wird die Verbindungspfadsuche, d. h. das "Routing", dadurch wesentlich effizienter ausgestaltet, daß die Vermittlungseinrichtung auch für diejenigen Verbindungspfade, für die sie als "Non-assigning Exchange" konfiguriert ist, Informationen über die augenblickliche Belegung dieser Verbindungspfade führt. Insbesondere werden diese Informationen in Form einer Daten-Schattentabelle (Shadow Bandwidth Pool) abgelegt. Anhand der in dieser Schattentabelle gespeicherten Informationen kann die Vermittlungseinrichtung für den Fall, daß sie unter denjenigen Verbindungspfaden, für die sie selbst als "Assigning Exchange" konfiguriert ist, keinen geeigneten Verbindungspfad ermitteln kann, eine benachbarte Vermittlungseinrichtung auswählen, die mit großer Wahrscheinlichkeit ausreichend Ressourcen für die vorliegende Verbindungsanfrage zur Verfügung stellt. Benachbarte Vermittlungseinrichtungen, die gemäß der vorliegenden Informationen die benötigte Bandbreite vermutlich nicht bereitstellen können, werden für den "Routing"-Vorgang erst gar nicht in Betracht gezogen.

Aufgrund dieser Ausgestaltung der vorliegenden Erfindung kann für den Fall, daß die Vermittlungseinrichtung keine geeigneten Verbindungspfade, für die sie selbst als "Assigning Exchange" konfiguriert ist, ermitteln kann, die Anzahl der erfolgreichen Verbindungsversuche wesentlich erhöht werden. Der Blindverkehr durch chancenlose Verbindungsversuche wird deutlich reduziert und die Effizienz der Wegsuche erheblich erhöht.

Die Erfindung wird nachfolgend anhand eines bevorzugten Ausführungsbeispiels näher erläutert. Dabei zeigt:
Fig. 1 den beispielhaften Aufbau eines bevorzugten Ausführungsbeispiels einer Vermittlungseinrichtung gemäß der vorliegenden Erfindung, und
Fig. 2 den beispielhaften Aufbau einer bekannten Vermittlungseinrichtung für ein ATM-Kommunikationsnetz.

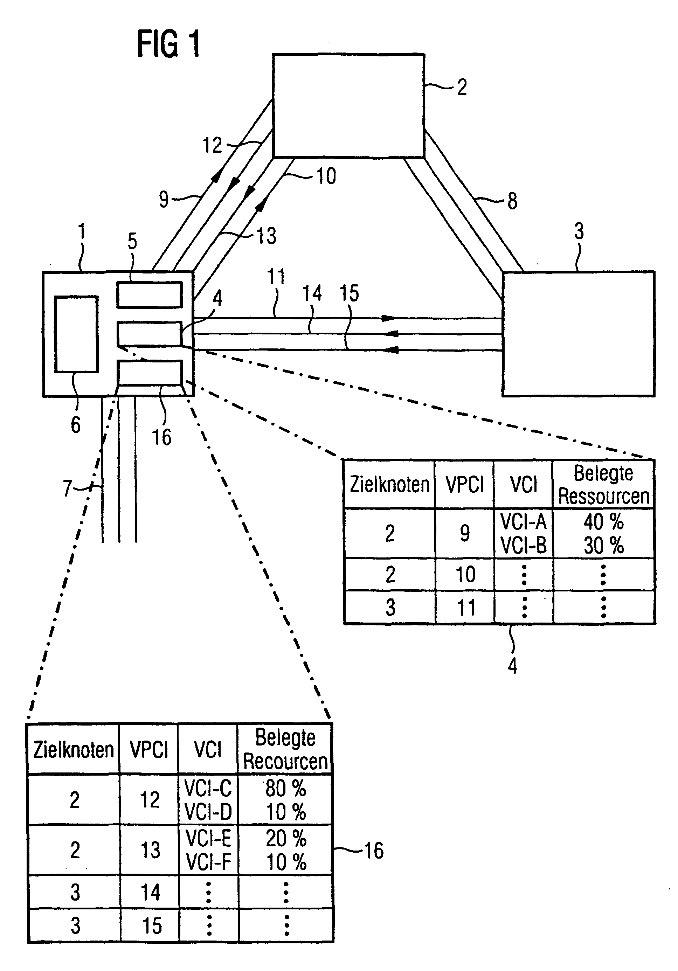

Die Erfindung wird nachfolgend anhand eines bevorzugten Ausführungsbeispiels unter Bezugnahme auf Fig. 1 erläutert, wobei insbesondere die Unterschiede der vorliegenden Erfindung zu der in Fig. 2 gezeigten bekannten Vermittlungseinrichtung dargelegt werden. Die in Fig. 1 gezeigte Vermittlungseinrichtung basiert auf der in Fig. 2 dargestellten Vermittlungseinrichtung, so daß auf die zuvor beschriebene Funktionsweise der bekannten Vermittlungseinrichtung an dieser Stelle ausdrücklich verwiesen wird.

Die in Fig. 1 gezeigte Vermittlungseinrichtung 1 funktioniert an sich auf bekannte Art und Weise, wie es bereits zuvor anhand Fig. 2 erläutert worden ist. Der wesentliche Unterschied der vorliegenden Erfindung zu der bekannten Vermittlungseinrichtung besteht jedoch in der Tatsache, daß gemäß der vorliegenden Erfindung die Vermittlungseinrichtung 1 auch Informationen über die Belegung derjenigen an die Vermittlungseinrichtung 1 angeschlossenen Verbindungspfade speichert, für die die Vermittlungseinrichtung 1 als "Non-assigning Exchange" konfiguriert ist, d. h. für die die Vermittlungseinrichtung 1 bei Vorliegen einer Verbindungsanfrage nicht zur Zuweisung eines Übertragungskanals (Virtual Channel, VC) und zur entsprechenden Belegung der Bandbreite berechtigt ist. Bei dem in Fig. 1 gezeigten Ausführungsbeispiel trifft dies insbesondere auf die Verbindungspfade 12 - 15 zu, wobei hinsichtlich der Verbindungspfade 12, 13 die Vermittlungseinrichtung 2 und hinsichtlich der Verbindungspfade 14, 15 die Vermittlungseinrichtung 3 als "Assigning Exchange" konfiguriert ist und bei Vorliegen einer Verbindungsanfrage über diese Verbindungspfade 12 - 15 nur die Vermittlungseinrichtung 2 bzw. 3 einen Übertragungskanal und eine entsprechende Bandbreite zuweisen darf.

Die Vermittlungseinrichtung 1 verwaltet die Information über die belegten Ressourcen der jeweiligen Verbindungspfade, für die sie als "Non-assigning Exchange" konfiguriert ist, in Form einer Schattentabelle, die in weiteren Speichermitteln 16 abgelegt ist. Dabei kann diese Schattentabelle insbesondere in Form einer Datei oder in Form eines physikalischen Speichers realisiert sein. Diese Schattentabelle (Shadow Bandwidth Pool) ist im wesentlichen analog zu der in den Speichermitteln 4 abgelegten Tabelle (Bandwidth Pool), welche die Verbindungspfade 9 - 11 verwaltet, für die die Vermittlungseinrichtung 1 als "Assigning Exchange" konfiguriert ist, aufgebaut. Das heißt auch in dieser in den Speichermitteln 16 abgelegten Tabelle sind die augenblickliche Belegung der einzelnen Verbindungspfade 12 - 16 sowie die über diese Verbindungspfade augenblicklich zugewiesenen virtuellen Kanäle (Virtual Channel, VC) definiert. Jeder Verbindungspfad ist in Form eines Identifiers (Virtual Path Connection Identifier, VPCI) identifiziert, und für jeden Verbindungspfad sind die augenblicklich über diesen Verbindungspfad festgelegten Übertragungskanäle in Form von "Virtual Channel Identifiers, VCI" spezifiziert. Für jeden Übertragungskanal ist zudem in der in den Speichermitteln 16 abgelegten Tabelle festgehalten, wie viele Ressourcen die jeweilige Verbindung augenblicklich belegt. So ist in den Speichermitteln 16 beispielsweise gespeichert, daß die Übertragung, die durch den Identifier VCI - C spezifiert ist, augenblicklich 80 % der über den Verbindungspfad 12 (VPCI = 12) zur Verfügung stehende Bandbreite belegt. Entsprechende Informationen sind für alle anderen Verbindungspfade 12 - 15, für die die Vermittlungseinrichtung 1 nicht zur Zuweisung eines Übertragungskanals und zur Belegung von Bandbreite berechtigt ist, festgehalten.

Geht nun bei der Vermittlungseinrichtung 1 beispielsweise über das Verbindungspfadbündel 7 eine Verbindungsanfrage ein, versucht die Vermittlungseinrichtung 1 - wie bereits anhand Fig. 2 erläutert worden ist - zunächst als "Assigning Exchange" zu agieren, d. h. die Vermittlungseinrichtung 1 versucht einen geeigneten Übertragungskanal sowie eine entsprechende Bandbreite in denjenigen Verbindungspfaden zu belegen, für die die Vermittlungseinrichtung 1 als "Assigning Exchange" konfiguriert ist. Dies trifft im vorliegenden Ausführungsbeispiel auf die Verbindungspfade 9 - 11 zu. Hat die Vermittlungseinrichtung 1 aus den Verbindungspfaden 9 - 11 einen geeigneten Verbindungspfad ermittelt, der ausreichend Ressourcen für die gewünschte Verbindung zur Verfügung stellt, weist sie der gewünschten Verbindung auf dem ermittelten Verbindungspfad einen Übertragungskanal zu und belegt die erforderliche Bandbreite. Der "Virtual Path Connection Identifier" (VPCI) und der "Virtual Channel Identifier" (VCI) des belegten Kanals werden anschließend von der Vermittlungseinrichtung 1 der entsprechenden benachbarten Vermittlungseinrichtung 2 oder 3 in Form der ersten B-ISUP-Vorwärtsnachricht, d. h. in Form der sogenannten IAM-Nachricht (Initial Address Message), mitgeteilt. Insoweit stimmt die Funktion der in Fig. 1 gezeigten Vermittlungseinrichtung gemäß der vorliegenden Erfindung mit der Funktion der bereits bekannten Vermittlungseinrichtung (vergl. Fig. 2) überein.

Kann jedoch die Vermittlungseinrichtung 1 anhand derjenigen Verbindungspfade 9 - 11, für die die Vermittlungseinrichtung 1 zur Zuweisung eines Übertragungskanals und zur Belegung von Bandbreite berechtigt ist, keinen geeigneten Verbindungspfad ermitteln, der ausreichend Ressourcen für die gewünschte Verbindung bereitstellt, muß die Vermittlungseinrichtung 1 als "Non-assigning Exchange" agieren und die erforderliche Bandbreite von einer der benachbarten Vermittlungseinrichtungen 2, 3 anfordern. Das heißt, die Vermittlungseinrichtung 1 muß eine geeignete benachbarte Vermittlungseinrichtung 2, 3 ermitteln, die für einen der an die Vermittlungseinrichtung 1 angeschlossenen Verbindungspfade als "Assigning Exchange" agiert. Dies trifft bei dem in Fig. 1 gezeigten Ausführungsbeispiel insbesondere auf die Verbindungspfade 12 - 15 zu. Um eine hierzu geeignete benachbarte Vermittlungseinrichtung 2, 3 zu ermitteln, greifen die Steuermittel 6 der Vermittlungseinrichtung 1 auf die in den Speichermitteln 16 abgelegten Informationen, d. h. auf die Schattentabelle (Shadow Bandwidth Pool), zu.

Die Steuermittel 6 durchsuchen die in den Speichermitteln 16 abgelegten Informationen nach einer benachbarten Vermittlungseinrichtung 2, 3, die die für die vorliegende Verbindungsanfrage erforderliche Bandbreite mit hoher Wahrscheinlichkeit zur Verfügung stellen kann. Des weiteren kann zur Ermittlung der zu kontaktierenden benachbarten Vermittlungseinrichtung zusätzlich berücksichtigt werden, welche der benachbarten Vermittlungseinrichtungen 2, 3 den kürzesten Verbindungspfad bietet. In der Regel ist diese Vorgabe in den Speichermitteln 5 abgelegt, da - wie bereits anhand Fig. 2 erläutert worden ist - für jede Vermittlungseinrichtung 1 bereits zu Beginn der Inbetriebnahme konfiguriert ist, über welche benachbarte Vermittlungseinrichtung normalerweise ein Verbindungsaufbau erfolgen soll.

Im vorliegenden Fall sei zunächst angenommen, daß an der Vermittlungseinrichtung 1 eine Verbindungsanfrage vorliegt, welche ca. 20 % der insgesamt auf einem der Verbindungspfade 9-15 zur Verfügung stehenden Ressourcen belegen würde. Bei der in Fig. l'dargestellten Situation und dem in Fig. 1 dargestellten Tabelleninhalt der Speichermittel 4 und 16 würde dies bedeuten, daß die Vermittlungseinrichtung 1 zunächst den Tabelleninhalt (Band Width Pool) der Speichermittel 4 nach einem geeigneten Verbindungspfad durchsucht. Da bei dem in Fig. 1 gezeigten Beispiel augenblicklich von dem Verbindungspfad 9 lediglich insgesamt 70 % durch die Übertragungskanäle VCI-A und VCI-B belegt sind, stellt der Verbindungspfad 9 noch ausreichend Ressourcen, d. h. eine ausreichende Bandbreite, für die gewünschte Verbindungsanfrage zur Verfügung. Demzufolge kann die Vermittlungseinrichtung 1 den Verbindungspfad 9 als geeigneten Verbindungspfad für die gewünschte Verbindung auswählen und weist der gewünschten Verbindung beispielsweise den Übertragungskanal mit dem "Virtual Channel Identifier" VCI-G zu. Die Informationen VPCI=9 und VCI=VCI-G werden anschließend der Vermittlungseinrichtung 2 in Form der ersten B-ISUP-Vorwärtsnachricht mitgeteilt.

Nachfolgend sei angenommen, daß die an der Vermittlungseinrichtung 1 anliegende Verbindungsanfrage beispielsweise 50 % der auf den einzelnen Verbindungspfaden 9 - 15 jeweils insgesamt zur Verfügung stehenden Bandbreite belegen würde. In diesem Fall kann die Vermittlungseinrichtung 1 bzw. ihre Steuermittel 6 anhand der in den Speichermitteln 4 abgelegten Informationen keinen geeigneten Verbindungspfad zu einer benachbarten Vermittlungseinrichtung 2, 3 ermitteln, für den die Vermittlungseinrichtung 1 als "Assigning Exchange" konfiguriert ist, d. h. für den die Vermittlungseinrichtung 1 zur Vergabe eines Übertragungskanals und zur Belegung von Bandbreite berechtigt ist. Demzufolge muß die Vermittlungseinrichtun 1 als "Non-assigning Exchange" agieren und Bandbreite von einer der benachbarten Vermittlungseinrichtungen 2, 3 anfordern. Um eine geeignete Vermittlungseinrichtung auszuwählen, greifen die Steuermittel 6 auf die in den Speichermitteln 16 abgelegten Informationen (Shadow Bandwidth Pool) zu und ermitteln eine benachbarte Vermittlungseinrichtung 2, 3, die mit großer Wahrscheinlichkeit ausreichend Ressourcen für die vorliegende Verbindungsanfrage zur Verfügung stellt. Wie bereits erläutert worden ist, sind in den Speichermitteln 16 lediglich diejenigen Verbindungspfade der Vermittlungseinrichtung 1 berücksichtigt, für die die Vermittlungseinrichtung 1 nicht zur Zuweisung eines Übertragungskanals und zur Belegung von Bandbreite berechtigt ist. Dies trifft im vorliegenden Fall insbesondere auf die Verbindungspfade 12 - 15 zu. In den Speichermitteln 16 ist gemäß Fig. 1 beispielsweise abgespeichert, daß von der Vermittlungseinrichtung 2 für den Verbindungspfad 12 bereits 2 Übertragungskanäle VCI-C und VCI-D zugewiesen worden sind, die insgesamt 90 % der auf dem Verbindungspfad 12 zur Verfügung stehenden Ressourcen belegen. Demzufolge scheidet der Verbindungspfad 12 für die vorliegende Verbindungsanfrage aus. Hingegen wurden von der Vermittlungseinrichtung 2 auf dem Verbindungspfad 13 zwei Übertragungskanäle VCI-E und VCI-F zugewiesen, die augenblicklich lediglich 30 % der auf diesem Verbindungspfad zur Verfügung stehenden Ressourcen belegen. Die Steuermittel 6 erkennen somit, daß die Vermittlungseinrichtung 2 vermutlich ausreichend Ressourcen (nämlich in Form des Verbindungspfads 13) für die anliegende Verbindungsanfrage zur Verfügung stellen, und wählen daher die Vermittlungseinrichtung 2 als "Assigning Exchange" für die vorliegende Verbindungsanfrage aus. Die Vermittlungseinrichtung 1 übermittelt anschließend an die Vermittlungseinrichtung 2 die B-ISUP-Vorwärtsnachricht IAM (Initial Address Message), ohne jedoch zugleich eine geeignete VPCI- oder VCI-Information zu übermitteln. Diese Belegungsnachricht IAM wird anschließend von der Vermittlungseinrichtung 2 ausgewertet und die Vermittlungseinrichtung 2 überprüft anhand der ihr zur Verfügung stehenden Informationen über diejenigen Verbindungspfade 12, 13, für sie als "Assigning Exchange" konfiguriert ist, ob tatsächlich ein Verbindungspfad zur Verfügung steht, der ausreichend Kapazitäten bzw. Ressourcen für die vorliegende Verbindungsanfrage zur Verfügung stellt. Ist dies der Fall, weist die Vermittlungseinrichtung 2 der vorliegenden Verbindungsanfrage einen Übertragungskanal auf einem geeigneten Verbindungspfad zu. Im vorliegenden Fall kann die Vermittlungseinrichtung 2 beispielsweise einen Übertragungskanal VCI-G auf dem Verbindungspfad 13 zuweisen. Die Informationen über den ausgewählten Verbindungspfad sowie den zugewiesenen Übertragungskanal werden von der Vermittlungseinrichtung 2 nachfolgend der Vermittlungseinrichtung 1 in Form der ersten B-ISUP-Rückwärtsnachricht IAA (Initial Address Acknowledgement) mitgeteilt, d. h. die Vermittlungseinrichtung 2 teilt der Vermittlungseinrichtung 1 die Werte VPCI=13 und VCI=VCI-G mit. Die von der Vermittlungseinrichtung 2 an die Vermittlungseinrichtung 1 übermittelten Informationen enthalten zudem Informationen über die von den ausgewählten Übertragungskanal belegten Ressourcen, so daß die Vermittlungseinrichtung 1 bzw. ihre Steuermittel 6 anschließend die in den Speichermitteln 16 abgelegten Informationen entsprechend aktualisieren können.

Sollte die Vermittlungseinrichtung 2 nach Empfangen einer entsprechenden Anfrage der Vermittlungseinrichtung 1 entgegen der Annahme der Vermittlungseinrichtung 1 keinen geeigneten Verbindungspfad auffinden können, wird die Verbindungsanfrage von der Vermittlungseinrichtung 2 in Form der B-ISUP-Rückwärtsnachricht IAR (Initial Address Rechecked) abgewiesen. In diesem Fall muß die Vermittlungseinrichtung 1 eine andere benachbarte Vermittlungseinrichtung auswählen, die als "Assigning Exchange" tätig werden kann, d. h. es wird ein Re-Routing-Vorgang durchgeführt.

Abschließend sei darauf hingewiesen, daß aufgrund der eingangs beschriebenen Gründe die in der Schattentabelle der Speichermittel 16 abgelegten Informationen nicht von der Vermittlungseinrichtung 1, die als "Non-assigning Exchange" tätig wird, für die Annahme einer Verbindung und für die Zuweisung eines Übertragungskanals verwendet werden dürfen. Über die Zuweisung eines Übertragungskanals und die Belegung einer Bandbreite darf weiterhin ausschließlich von derjenigen Vermittlungseinrichtung entschieden werden, die für den entsprechenden Verbindungspfad als "Assigning Exchange" konfiguriert ist.

### Vermittlungseinrichtung

### Bezugszeichenliste

- 1 - 3: Vermittlungseinrichtung
- 4, 5 16: Speichermittel
- 6: Steuermittel
- 7 - 15: Verbindungspfade

## Patentansprüche

1. Vermittlungseinrichtung (1) für ein Kommunikationsnetz, wobei die Vermittlungseinrichtung (1) über mindestens einen Verbindungspfad (9 - 15) mit mindestens einer weiteren benachbarten Vermittlungseinrichtung (2, 3) des Kommunikationsnetzes verbunden ist, und
wobei die an die Vermittlungseinrichtung (1) angeschlossenen Verbindungspfade (9, 15) in erste (9 - 11) und zweite (12-15) Verbindungspfade unterteilt sind, wobei die Vermittlungseinrichtung (1) bei Vorliegen einer Verbindungsanfrage nur für die ersten Verbindungspfade (9 - 11) zur Zuweisung eines Übertragungskanals für diese Verbindungsanfrage berechtigt ist, während für die zweiten Verbindungspfade (12 - 15) die über den entsprechenden zweiten Verbindungspfad mit der Vermittlungseinrichtung (1) verbundene benachbarte Vermittlungseinrichtung (2, 3) zur Zuweisung eines entsprechenden Übertragungskanals berechtigt ist,
mit ersten Speichermitteln (4) zum Speichern von Informationen über die freien oder belegten Ressourcen der ersten Verbindungspfade (9 - 11), und
mit Steuermitteln (6), um bei Vorliegen einer Verbindungsanfrage anhand der in den ersten Speichermitteln (4) gespeicherten Informationen einen geeigneten ersten Verbindungspfad (9 - 11) zu ermitteln, der für die gewünschte Verbindung ausreichende Ressourcen bereitstellt,
**dadurch gekennzeichnet,**
**daß** zweite Speichermittel (16) vorhanden sind, um Informationen über die freien oder belegten Ressourcen der zweiten Verbindungspfade (12 - 15) zu speichern, und
**daß** die Steuermittel (6) derart ausgestaltet sind, daß sie für den Fall, daß bei Vorliegen einer Verbindungsanfrage kein geeigneter erster Verbindungspfad (9 - 11) anhand der in den ersten Speichermitteln (4) gespeicherten Informationen ermittelt werden konnte, anhand der in den zweiten Speichermitteln (16) gespeicherten Informationen eine benachbarte Vermittlungseinrichtung (2, 3) auswählen, die über einen zweiten Verbindungspfad (12 - 15) mit der Vermittlungseinrichtung (1) verbunden ist, welcher für die gewünschte Verbindung vermutlich ausreichend Ressourcen bereitstellt, und an die ausgewählte benachbarte Vermittlungseinrichtung (2, 3) eine Aufforderungsmeldung zur Zuweisung eines Übertragungskanals für die gewünschte Verbindung übermitteln.

2. Vermittlungseinrichtung nach Anspruch 1,
**dadurch gekennzeichnet,**
**daß** die Steuermittel (6) derart ausgestaltet sind, daß sie nach Ermitteln eines geeigneten ersten Verbindungspfad (9-11) an diejenige benachbarte Vermittlungseinrichtung (2, 3), die über den ermittelten ersten Verbindungspfad (9 - 11) mit der Vermittlungseinrichtung (1) verbunden ist, Informationen über den zugewiesenen Übertragungskanal für die gewünschte Verbindung und Informationen über den ermittelten Verbindungspfad (9 - 11) übertragen.

3. Vermittlungseinrichtung nach Anspruch 2,
**dadurch gekennzeichnet,**
**daß** die Steuermittel (6) derart ausgestaltet sind, daß sie für den Fall, daß kein erster Verbindungspfad (9 - 11) mit für die Verbindungsanfrage ausreichenden Ressourcen ermittelt werden konnte, die Aufforderungsmeldung zur Zuweisung eines Übertragungskanals für die gewünschte Verbindung an die benachbarte Vermittlungseinrichtung (2, 3) in Form einer Vorwärtsmitteilung ohne Informationen über den Verbindungspfad oder den Übertragungskanal übermitteln.

4. Vermittlungseinrichtung nach einem der vorhergehenden Ansprüche,
**dadurch gekennzeichnet,**
**daß** die Steuermittel (6) derart ausgestaltet sind, daß sie nach Übermitteln einer Aufforderungsmeldung an die von den Steuermitteln (6) ausgewählte benachbarte Vermittlungseinrichtung (2, 3) und nach Zuweisung eines Übertragungskanals durch die benachbarte Vermittlungseinrichtung (2, 3) die in den zweiten Speichermitteln (16) gespeicherten Informationen anhand einer Bestätigungsmeldung der benachbarten Vermittlungseinrichtung (2, 3) erneuern, wobei die Bestätigungsmeldung Informationen über den von der benachbarten Vermittlungseinrichtung (2, 3) zugewiesenen Übertragungskanal, die für die gewünschte Verbindung belegten Ressourcen und den von der benachbarten Vermittlungseinrichtung (2, 3) ausgewählten zweiten Verbindungspfad (12 - 15) umfassen.

5. Vermittlungseinrichtung nach einem der vorhergehenden Ansprüche,
**dadurch gekennzeichnet,**
**daß** die Kommunikation zwischen der Vermittlungseinrichtung (1) und den benachbarten weiteren Vermittlungseinrichtungen (2, 3) des Kommunikationsnetzes über B-ISUP-Signalisierungsmeldungen erfolgt.

6. Vermittlungseinrichtung nach einem der vorhergehenden Ansprüche,
**dadurch gekennzeichnet,**
**daß** dritte Speichermittel (5) zum Speichern von Konfigurationsdaten der Vermittlungseinrichtung (1) vorgesehen sind, wobei die Konfigurationsdaten für die Vermittlungseinrichtung (1) festlegen, welche der an die Vermittlungseinrichtung (1) angeschlossenen Verbindungspfade erste Verbindungspfade (9-11) sind, für die die Vermittlungseinrichtung (1) zur Zuweisung eines Übertragungskanals bei einer Verbindungsanfrage berechtigt ist, und welche der Verbindungspfade zweite Verbindungspfade (12 - 15) sind, für die nicht die Vermittlungseinrichtung (1), sondern eine entsprechend benachbarte Vermittlungseinrichtung (2, 3) zur Zuweisung eines Übertragungskanals für die Verbindungsanfrage berechtigt ist.

7. Vermittlungseinrichtung nach Anspruch 6,
**dadurch gekennzeichnet,**
**daß** die in den dritten Speichermitteln (5) gespeicherten Konfigurationsdaten festlegen, zu welcher benachbarten Vermittlungseinrichtung (2, 3) die Vermittlungseinrichtung (1) bei Vorliegen einer Verbindungsanfrage einen Verbindungspfad ermitteln soll.

8. Verwendung einer Vermittlungseinrichtung nach einem der vorhergehenden Ansprüche in einem ATM-Breitband-Kommunikationsnetz.

## Claims

1. Switching device (1) for a communications network, with the switching device (1) being connected via at least one connecting path (9-15) to at least one further adjacent switching device (2,3) in the communications network, and
with the connecting paths (9,15) which are connected to the switching device (1) being subdivided into first (9-11) and second (12-15) connecting paths, with the switching device (1) being authorized to assign a transmission channel for a connection request when such a connection request is present for only the first connecting paths (9-11), while the adjacent switching device (2,3) which is connected to the switching device (1) via the corresponding second connecting path, is authorized to assign a corresponding transmission channel for the second connecting paths (12-15),
having first memory means (4) for storing information about the free or busy resources of the first connecting paths (9-11), and
having control means (6) in order to determine a suitable first connecting path (9-11), which provides sufficient resources for the desired connection, on the basis of the information which is stored in the first memory means (4), when a connection request is present,
**characterized**
**in that** second memory means (16) are provided, in order to store information about the free or busy resources of the second connecting paths (12-15), and
**in that** the control means (6) are designed in such a manner that, in the situation when it has not been possible to determine any suitable first connection path (9-11) on the basis of the information stored in the first memory means (4) when a connection request is present, said control means (6) use the information stored in the second memory means (16) to select an adjacent switching device (2,3), which is connected to the switching device (1) via a second connecting path (12-13) which supposedly provides sufficient resources for the desired connection, and said control means (6) transmit to the selected adjacent switching device (2,3) a request message for assignment of a transmission channel for the desired connection.

2. Switching device according to Claim 1,
**characterized**
**in that** the control means (6) are designed in such a manner that after determining a suitable first connecting path (9-11), the control means (6) transmit to that adjacent switching device (2,3) which is connected to the switching device (1) via the determined first connecting path (9-11) information about the assigned transmission channel for the desired connection, and information about the determined connecting path (9-11).

3. Switching device according to Claim 2,
**characterized**
**in that** the control means (6) are designed in such a manner that, in the situation where it has not been possible to determine any first connecting path (9-11) with sufficient resources for the connection request, the control means (6) transmit a request message for assignment of a transmission channel for the desired connection to the adjacent switching device (2,3) in the form of a forward message, without information about the connecting path or the transmission channel.

4. Switching device according to one of the preceding claims,
**characterized**
**in that** the control means (6) are designed in such a manner that, after transmitting a request message to the adjacent switching device (2,3) which is selected by the control means (6), and after the adjacent switching device (2,3) has assigned a transmission channel, the control means (6) refresh the information stored in the second memory means (16), on the basis of an acknowledgement message from the adjacent switching device (2,3), with the acknowledgement message including information about the transmission channel assigned by the adjacent switching device (2,3), the resources used for the desired connection, and the second connecting path (12-15) selected by the adjacent switching device (2,3).

5. Switching device according to one of the preceding claims,
**characterized**
**in that** the switching device (1) and the adjacent further switching devices (2,3) in the communications network communicate via B-ISUP signalling messages.

6. Switching device according to one of the preceding claims,
**characterized**
**in that** third memory means (5) are provided for storing configuration data for the switching device (1),
with the configuration data defining, for the switching device (1), which of the connecting paths connected to the switching device (1)⁻ are first connecting paths (9-11), for which the switching device (1) is authorized to assign a transmission channel for a connection request, and which of the connecting paths are second connecting paths (12-15), for which a correspondingly adjacent switching device (2,3) is authorised to assign a transmission channel for the connection request rather than the switching device (1).

7. Switching device according to Claim 6,
**characterized**
**in that** the configuration data stored in the third memory means (5) define which of the adjacent switching devices (2,3) the switching device (1) is intended to determine a connecting path to when a connection request is present.

8. Use of a switching device according to one of the preceding claims in an ATM broadband communications network.

## Revendications

1. Commutateur (1) pour un réseau de communication,
dans lequel le commutateur (1) est relié par l'intermédiaire d'au moins un chemin de liaison (9 à 15) à au moins un autre commutateur (2, 3) du réseau de communication, et
dans lequel les chemins de liaison (9, 15) raccordés au commutateur (1) sont divisés en premiers chemins de liaison (9 à 11) et en deuxièmes chemins de liaison (12 à 15),
le commutateur (1) en présence d'une demande de liaison n'étant autorisé que pour les premiers chemins . de liaison (9 à 11) à attribuer un canal ,de transmission pour cette demande de liaison tandis que, pour les deuxièmes chemins de liaison (12 à 15), le commutateur (2, 3) voisin relié au commutateur (1) par l'intermédiaire du deuxième chemin de liaison correspondant est autorisé à attribuer un canal de transmission correspondant,
comportant des premiers moyens de mémorisation (4) pour mémoriser des informations sur les ressources libres ou occupées des premiers chemins de liaison (9 à 11), et
comportant des moyens de commande (6) pour déterminer en présence d'une demande de liaison et à l'aide des informations mémorisées dans les premiers moyens de mémorisation (4) un premier chemin de liaison (9 à 11) approprié qui dispose de ressources suffisantes pour la liaison souhaitée,
**caractérisé par le fait que**
il existe des deuxièmes moyens de mémorisation (16) pour mémoriser des informations sur les ressources libres ou occupées des deuxièmes chemins de liaison (12 à 15), et
les moyens de commande (6) sont conçus de telle sorte que, pour le cas où en présence d'une demande de liaison aucun premier chemin de liaison (9 à 11) approprié n'a pu être déterminé à l'aide des informations mémorisées dans les moyens de mémorisation (4), ils sélectionnent à l'aide des informations mémorisées dans les deuxièmes moyens de mémorisation (16) un commutateur (2, 3) voisin qui est relié par l'intermédiaire d'un deuxième chemin de liaison (12 à 15) au commutateur (1) et qui dispose probablement de ressources suffisantes pour la liaison souhaitée et ils transmettent au commutateur (2, 3) voisin sélectionné une demande de liaison pour l'attribution d'un canal de transmission pour la liaison souhaitée.

2. Commutateur selon la revendication 1,
**caractérisé par le fait que** les moyens de commande (6) sont conçus de telle sorte que, après la détermination d'un premier chemin de liaison (9 à 11) approprié, ils transmettent au commutateur (2, 3) voisin qui est relié au commutateur (1) par l'intermédiaire du premier chemin de liaison (9 à 11) déterminé des informations sur le canal de transmission attribué pour la liaison souhaitée et des informations sur le chemin de liaison (9 à 11) déterminé.

3. Commutateur selon la revendication 2,
**caractérisé par le fait que** les moyens de commande (6) sont conçus de telle sorte que, pour le cas où aucun premier chemin de liaison (9 à 11) ayant des ressources suffisantes pour la demande de liaison n'a pu être déterminé, le message de demande pour l'attribution d'un canal de transmission pour la liaison souhaitée est transmis au commutateur (2, 3) voisin sous la forme d'un message en avant sans information sur le chemin de liaison ou sur le canal de transmission.

4. Commutateur selon l'une des revendications précédentes,
**caractérisé par le fait que** les moyens de commande (6) sont conçus de telle sorte que, après la transmission d'un message de demande au commutateur (2, 3) voisin sélectionné par les moyens de commande (6) et après l'attribution d'un canal de transmission par le commutateur (2, 3) voisin, les informations mémorisées dans les deuxièmes moyens de mémorisation (16) sont actualisées à l'aide d'un message d'acquittement du commutateur (2, 3) voisin, le message d'acquittement comprenant des informations sur le canal de transmission attribué par le commutateur (2, 3) voisin, sur les ressources occupées par la liaison souhaitée et sur le deuxième chemin de liaison (12 à 15) sélectionné par le commutateur (2, 3) voisin.

5. Commutateur selon l'une des revendications précédentes,
**caractérisé par le fait que** la communication entre le commutateur (1) et les autres commutateurs (2, 3) voisins du réseau de communication s'effectue par l'intermédiaire de messages de signalisation B-ISUP.

6. Commutateur selon l'une des revendications précédentes,
**caractérisé par le fait qu'**il est prévu des moyens de mémorisation (5) pour mémoriser des données de configuration du commutateur (1), les données de configuration spécifiant pour le commutateur (1) quels chemins de liaison raccordés au commutateur (1) sont des premiers chemins de liaison (9 à 11) pour lesquels le commutateur (1) est autorisé à attribuer un canal de transmission lors d'une demande de liaison et quels chemins de liaison sont des deuxièmes chemins de liaison (12 à 15) pour lesquels ce n'est pas le commutateur (1) mais un commutateur (2, 3) voisin correspondant qui est autorisé à attribuer un canal de transmission pour la demande de liaison.

7. Commutateur selon la revendication 6,
**caractérisé par le fait que** les données de configuration mémorisées dans les troisièmes moyens de mémorisation (5) spécifient vers quel commutateur (2, 3) voisin le commutateur (1) en présence d'une demande de liaison doit déterminer un chemin de liaison.

8. Utilisation d'un commutateur selon l'une des revendications précédentes dans un réseau de communication à large bande ATM.
